# EUROPÄISCHE PATENTSCHRIFT

(11) **EP 2 643 368 B1**
(45) Veröffentlichungstag und Bekanntmachung des Hinweises auf die Patenterteilung: **23.09.2015**
(21) Anmeldenummer: 11784708.7
(22) Anmeldetag: 22.11.2011
(51) Int. Cl.: C08F 216/14, C08F 220/04, C08F 228/02, C11D 3/37

(54) **COPOLYMERE, DIE CARBONSÄUREGRUPPEN, SULFONSÄUREGRUPPEN UND POLYALKYLENOXIDGRUPPEN ENTHALTEN, ALS BELAGSINHIBIERENDER ZUSATZ ZU WASCH- UND REINIGUNGSMITTELN**
COPOLYMERS CONTAINING CARBONIC ACID GROUPS, SULFONIC ACID GROUPS AND POLYALKYLENEOXIDE GROUPS AS ADDITIVE FOR INHIBITING PLAQUE FORMATION IN DETERGENTS
COPOLYMÈRES CONTENANT DES GROUPES ACID CARBONIQUE, DES GROUPES ACID SULFONIQUE ET DES GROUPES POLYALKYLÈNEOXYDE EN TANT QU'ADDITIVE POUR EMPECHER LA FORMATION DE LA PLAQUE DANS DETERGANTS

(30) Priorität: 23.11.2010 EP 10192171
(43) Veröffentlichungstag der Anmeldung: 02.10.2013
(73) Patentinhaber: BASF SE, 67056 Ludwigshafen (DE)
(72) Erfinder: DETERING, Jürgen, 67117 Limburgerhof (DE); URTEL, Bolette, 67240 Bobenheim-Roxheim (DE); WEBER, Heike, 68239 Mannheim (DE); ETTL, Roland, 68804 Altlussheim (DE); GÄDT, Torben, 83278 Traunstein (DE); HEINTZ, Ewald, 76889 Schweigen-Rechtenbach (DE); BASTIGKEIT, Thorsten, 42279 Wuppertal (DE); EITING, Thomas, 40589 Düsseldorf (DE); SENDOR-MÜLLER, Dorota, 4313 Möhlin (CH)
(86) Internationale Anmeldenummer: PCT/EP2011/070616
(87) Internationale Veröffentlichungsnummer: WO 2012/069440

(56) Entgegenhaltungen:
- DE-A1-102007 019 458

## Beschreibung

Die Erfindung betrifft Copolymere, die Carbonsäuregruppen, Sulfonsäuregruppen und Polyalkylenoxidgruppen enthalten, sowie deren Verwendung als belagsinhibierender Zusatz zu Wasch- und Reinigungsmitteln, insbesondere zu phosphathaltigen und phosphatfreien Reinigungsformulierungen für die maschinelle Geschirrreinigung.

Bei der maschinellen Geschirrspülreinigung soll das Spülgut in rückstandsfrei gereinigtem Zustand mit makellos glänzender Oberfläche anfallen, wofür üblicherweise ein Reiniger, ein Klarspüler und Regeneriersalz zur Wasserenthärtung eingesetzt werden müssen. Die seit 2001 im Markt eingeführten "3in1" Geschirrspülmittel vereinigen die Funktion von Reiniger, Klarspülmittel und Regeneriersalz in einem Produkt. Neben reinigenden Komponenten zur Entfernung der Anschmutzungen auf dem Spülgut enthalten sie integrierte Klarspültenside, die während des Klarspül- und Trocknungsgangs für einen flächigen Wasserablauf auf dem Spülgut sorgen und so Kalk- und Wasserflecken verhindern. Zusätzlich weisen sie Komponenten zur Bindung der härtebildenden Calcium- und Magnesiumionen auf. Dadurch entfällt für den Verbraucher ein Nachfüllen von Klarspüler und Salz in die Geschirrspülmaschine. Das Einbinden von weiteren Funktionen (z.B. Schutz vor Glaskorrosion und Schutz vor dem Anlaufen von Silber) führte zur Entwicklung von x in 1 (mit z. B. x = 6 oder 9) oder "all in one"-Produkten.

Copolymere aus carboxylgruppenhaltigen und sulfonsäuregruppenhaltigen Monomeren sind seit einigen Jahren wichtiger Bestandteil von phosphathaltigen und phosphatfreien maschinellen Geschirrspülmitteln. Ihr Beitrag zur Reinigungs- und Klarspülleistung und vor allem ihr Beitrag zur Verhinderung von Belägen auf dem Spülgut sind jedoch noch verbesserungsbedürftig.

EP-A 0 778 340 beschreibt die Verwendung von Copolymeren von Allylalkoholethoxylaten und Acrylsäure in phosphatfreien Geschirrspülmittelzusammensetzungen.

WO 02/08527 offenbart sulfonsäuregruppenhaltige Copolymere, die Herstellung der Copolymere und deren Verwendung als Zusatz zu Wasch-, Reinigungs- und Klarspülmitteln. Die Copolymere enthalten (a) 70 bis 100 mol-% mindestens zweier verschiedener monoethylenisch ungesättigter Carbonsäuremonomere und (b) 0 bis 30 mol-% eines oder mehrerer nichtionischer Monomere. Die Einführung der Sulfonsäuregruppen erfolgt durch Amidierung mit einer Amino-C₁-C₂-alkansulfonsäure. ,

WO 2005/042684 beschreibt die Verwendung spezieller Copolymere aus Acrylsäure, Methacrylsäure und Acrylsäurealkoxylaten als belagsinhibierende Additive bei der maschinellen Geschirrreinigung.

DE 102 25 794 beschreibt die Verwendung von sulfonsäuregruppenhaltigen Copolymeren aus 30 bis 95 mol-% einer monoethylenisch ungesättigten Carbonsäure, 3 bis 35 mol-% mindestens eines sulfonsäuregruppenhaltigen Monomers und 2 bis 35 mol-% eines (Meth)acrylsäurealkoxylats als belagsinhibierender Zusatz zu Wasch- und Reinigungsmitteln: In den Beispielen werden Copolymere aus (Meth)acrylsäure, Methoxypolyethylenglykolmethacrylat und Sulfoethylmethacrylsäure-Natriumsalz eingesetzt. In einem weiteren Beispiel wird ein binäres Copolymer aus Acrylsäure und 2-Acrylamido-2-methylpropansulfonsäure eingesetzt.

WO2008/132131 beschreibt die Verwendung von sulfonsäuregruppenhaltigen Copolymeren aus 30 bis 95 mol-% Acrylsäure und/oder Methacrylsäure, 3 bis 35 mol-% eines sulfonsäuregruppenhaltigen Monomers und 2 bis 35 mol-% eines nichtionischen Monomers der Formel

H₂C=C(R²)-COO-R³-[-R⁴-O-]ₙ-R⁵

als belagsinhibierender Zusatz zu Maschinengeschirrspülmitteln zur Verhinderung der Bildung von Calciumphosphat-Belägen.

WO 2010/024468 beschreibt die Verwendung von Copolymeren aus einem Carboxylatgruppen-haltigen Monomer, einem Sulfonatgruppen-haltigen Polymer und einem Allylether oder Allylalkohol-Ethoxylat mit 1 bis 5 Ethylenoxid-Gruppen als Zusatz zu Wasch- und Reinigungsmitteln. Bevorzugtes sulfonatgruppenhaltiges Monomer ist 2-Hydroxy-3-allyloxypropansulfonsäure.

Aufgabe der Erfindung ist es, Copolymere bereitzustellen, die sich durch vorteilhafte Anwendungseigenschaften, insbesondere durch ihre belagsinhibierende Wirkung und breite Einsetzbarkeit im Bereich der maschinellen Geschirrreinigung in phosphathaltigen und phosphatfreien Geschirrspülmitteln auszeichnen.

Aufgabe der Erfindung ist es weiterhin, verbesserte phosphathaltige und phosphatfreie Reinigungsformulierungen für die maschinelle Geschirrreinigung, die ein verbessertes Spülergebnis ergeben, bereitzustellen. Aufgabe der Erfindung ist es insbesondere, derartige Formulierungen bereitzustellen, welche ohne Verwendung von zusätzlichem Klarspüler ein streifen-, belag- und tropfenfreies Geschirr ergeben.

Gelöst wird die Aufgabe durch Copolymere, welche
a1) 30 bis 90 Gew.-% mindestens einer monoethylenisch ungesättigten C₃-C₈-Carbonsäure, eines Anhydrids oder Salzes derselben,
a2) 3 bis 60 Gew.-% mindestens eines Sulfonsäuregruppen enthaltenden Monomers, ausgewählt aus 2-Acrylamido-2-methylpropansulfonsäure, Allylsulfonsäure und deren wasserlöslichen Salzen,
a3) 3 bis 60 Gew.- % mindestens eines nichtionischen Monomers der Formel (I)

   H₂C=C(R¹)COO-[R²-O]ₒ-R³ (I),

   in der R¹ für Wasserstoff oder Methyl, R² für gleiche oder verschiedene Alkylenreste, die blockweise oder statistisch angeordnet sein können, ausgewählt aus Ethylen und 1,2-Propylen, und R³ für Wasserstoff oder einen geradkettigen oder verzweigten C₁-C₄-Alkylrest und o für eine natürliche Zahl von 3 bis 50 stehen,
a4) 0 bis 30 Gew.-% eines oder mehrerer weiterer ethylenisch ungesättigter Monomere, die mit a1), a2) und a3) polymerisierbar sind,
einpolymerisiert enthalten,
wobei die Summe aus a1), a2), a3) und a4) 100 Gew.-% ergibt.

Gelöst wird die Aufgabe weiterhin durch die Verwendung der Copolymere als belagsinhibierender Zusatz zu Wasch- und Reinigungsmitteln, insbesondere zu phosphatfreien oder phosphathaltigen Reinigungsformulierungen für die maschinelle Geschirrreinigung.

Es wurde gefunden, dass durch Zusatz der erfindungsgemäßen Copolymere, die Carbonsäuregruppen, Sulfonsäuregruppen und Polyalkylenoxidgruppen enthalten, zu phosphathaltigen und phosphatfreien maschinellen Geschirrspülmitteln eine ausgezeichnete Reinigungs- und Klarspülleistung sowie eine hervorragende Belagsinhibierung sowohl gegenüber anorganischen als auch organischen Belägen erzielt werden kann.

Gelöst wird die Aufgabe weiterhin durch eine Reinigungsformulierung für die maschinelle Geschirrreinigung enthaltend als Komponenten:
a) 1 bis 20 Gew.-% mindestens eines Copolymeren, welches
   a1) 30 bis 90 Gew.-% mindestens einer monoethylenisch ungesättigten C₃-C₈-Carbonsäure, eines Anhydrids oder Salzes derselben,
   a2) 3 bis 60 Gew.-% mindestens eines Sulfonsäuregruppen enthaltenden Monomers, ausgewählt aus 2-Acrylamido-2-methylpropansulfonsäure, Allylsulfonsäure und deren wasserlöslichen Salzen,
   a3) 3 bis 60 Gew.- % mindestens eines nichtionischen Monomers der Formel (I)

      H₂C=C(R¹)COO-[R²-O]ₒ-R³ (I),

      in der R¹ für Wasserstoff oder Methyl, R² für gleiche oder verschiedene Alkylenreste, die blockweise oder statistisch angeordnet sein können, ausgewählt aus Ethylen und 1,2-Propylen, und R³ für Wasserstoff oder einen geradkettigen oder verzweigten C₁-C₄-Alkylrest und o für eine natürliche Zahl von 3 bis 50 stehen,
   a4) 0 bis 30 Gew.-% eines oder mehrerer weiterer ethylenisch ungesättigter Monomere, die mit a1), a2) und a3) polymerisierbar sind,
   einpolymerisiert enthält,
   wobei die Summe aus a1), a2), a3) und a4) 100 Gew.-% ergibt,
b) 0 bis 20 Gew.-% von Komponente a) verschiedene Polycarboxylate,
c) 0 bis 50 Gew.-% Komplexbildner,
d) 0 bis 70 Gew.-% Phosphate,
e) 0 bis 60 Gew.-% weitere Builder und Cobuilder,
f) 0,1 bis 20 Gew.-% nichtionische Tenside,
g) 0 bis 30 Gew.-% Bleichmittel und gegebenenfalls Bleichaktivatoren und BleichKatalysatoren
h) 0 bis 8 Gew.-% Enzyme,
i) 0 bis 50 Gew.-% ein oder mehrere weitere Zusatzstoffe wie anionische oder zwitterionische Tenside, Alkaliträger, Korrosionsinhibitoren, Entschäumer, Farbstoffe, Duftstoffe, Füllstoffe, organische Lösungsmittel und Wasser,
wobei die Summe der Komponenten a) bis i) 100 Gew.-% ergibt.

Als Komponente a1) enthält das Copolymer 30 bis 90 Gew.-% mindestens einer monoethylenisch ungesättigten C₃-C₈-Carbonsäure, eines Anhydrids oder eines Salzes derselben. Geeignete wasserlösliche Salze sind beispielsweise die Natrium- und Kaliumsalze der Carbonsäuren.

Geeignete ungesättigte C₃-C₈-Carbonsäuren sind insbesondere Acrylsäure, Methacrylsäure, Ethacrylsäure, Vinylessigsäure, Allylessigsäure, Crotonsäure, Maleinsäure, Fumarsäure, Mesaconsäure und Itaconsäure sowie deren wasserlösliche Salze. Soweit die genannten ungesättigten C₃-C₈-Carbonsäuren Anhydride bilden können, sind auch diese als Monomere a1) geeignet, beispielsweise Maleinsäureanhydrid, Itaconsäureanhydrid und Methacrylsäureanhydrid.

Bevorzugte enthält das Copolymer als Komponente a1) Acrylsäure, Methacrylsäure oder deren wasserlösliche Salze. Wasserlösliche Salze sind beispielsweise die Natrium- und Kaliumsalze.

Als Komponente a2) enthält das Copolymer 3 bis 60 Gew.-% eines Sulfonsäuregruppen enthaltenden Monomers, ausgewählt aus 2-Acrylamido-2-methylpropansulfonsäure, Allylsulfonsäure und deren Salzen.

Geeignete Salze sind im Allgemeinen wasserlösliche Salze, bevorzugt die Natrium-, Kalium und Ammoniumsalze der genannten Säuren.

Als Komponente a3) enthält das Copolymer 3 bis 60 Gew.- % mindestens eines nichtionischen Monomers der Formel (I)

H₂C=C(R¹)COO-[R²-O]ₒ-R³ (I),

in der R¹ für Wasserstoff oder Methyl, R² gleiche oder verschiedene Alkylenreste, die blockweise oder statistisch angeordnet sein können, ausgewählt aus Ethylen und 1,2-Propylen, und R³ für Wasserstoff oder einen geradkettigen oder verzweigten C₁-C₄-Alkylrest und o für eine natürliche Zahl von 3 bis 50 stehen.

Die Alkylenreste können auch blockweise und statistisch angeordnet sein, also in ein oder mehreren Blöcken aus gleichen Alkylenoxidresten blockweise und daneben in ein oder mehreren Blöcken aus zwei oder mehr verschiedenen Alkylenoxidresten statistisch angeordnet sein. Dieser wird von der Formulierung "blockweise oder statistisch angeordnet" mit umfasst.

Das nichtionische Monomer a3) enthält im Mittel 3 bis 50, bevorzugt 8 bis 45, besonders bevorzugt 10 bis 45, speziell 20 bis 45 Alkylenoxid-Einheiten. Beispielsweise kann es im Mittel 22 oder 44 Alkylenoxid-Einheiten enthalten. Der Index o bezieht sich auf die mittlere Zahl der Alkylenoxid-Einheiten.

In einer speziellen Ausführungsform enthalten die nichtionischen Monomere a3) nur Ethylenoxid-Einheiten.

Bevorzugt ist R³ Methyl.

Als Komponente a4) kann das Copolymer 0 bis 30 Gew.-% von einem oder mehreren weiteren ethylenisch ungesättigten Monomeren enthalten, die mit a1), a2) und a3) polymerisierbar sind.

Als weitere ethylenisch ungesättigte Monomere a4) kommen beispielsweise Acrylamid, t-Butylacrylamid, Vinylacetat, Vinytmethylether, Hydroxybutylvinylether, 1-Vinylpyrrolidon, 1-Vinylcaprolactam, 1-Vinylimidazol, 2-Vinylpyridln, 4-Vinylpyridin, Methylmethacrylat, Ethylacrylat, Isobuten, Diisobuten, Isoprenol, 1-Alkene wie 1-Octen. N,N-Dimethylacrylamid und Styrol in Betracht.

Bevorzugt beträgt der Anteil an einpolymerisierten Monomeren a1), insbesondere an einpolymerisierter Acrylsäure, Methacrylsäure oder eines wasserlöslichen Salzes dieser Säuren, 40 bis 85 Gew.-% und besonders bevorzugt 47 bis 83 Gew.-%. Der Anteil an einpolymerisierter 2-Acrylamido-2-methylpropansulfonsäure a2) liegt vorzugsweise bei 4 bis 40 Gew.-%, vorzugsweise bei 6 bis 35 Gew.-% und besonders bevorzugt bei 8 bis 32 Gew.-%. Der Anteil an Monomereinheiten a3) der Formel (I) liegt vorzugsweise bei 4 bis 35 Gew.-%, besonders bevorzugt bei 6 bis 30 Gew.-%.

Falls Monomere a4) in den erfindungsgemäßen Copolymeren enthalten sind, beträgt ihr Anteil bevorzugt bis zu 20 Gew.-%, besonders bevorzugt bis zu 15 Gew.-% und speziell bis zu 10 Gew.-%.

Die erfindungsgemäßen Copolymere a) weisen im Allgemeinen ein mittleres Molekulargewicht M_{w} von 2000 bis 200 000 g/mol, bevorzugt von 3000 bis 100 000 g/mol, besonders bevorzugt von 10 000 bis 50 000 g/mol auf, bestimmt durch Gelpermeationschromatographie bei Raumtemperatur mit Wasser als Elutionsmittel gegen Polyacrylat-Standards.

Ihre K-Werte liegen bei 15 bis 100, vorzugsweise bei 20 bis 80, besonders bevorzugt bei 30 bis 50, gemessen bei pH 7,0 in 1 gew.-%iger wässriger Lösung bei 25 °C nach H. Fikentscher, Cellulose-Chemie Band 13, Seiten 58 bis 64 und 71 bis 74 (1932).

Die erfindungsgemäßen Copolymere können durch radikalische Polymerisation der Monomere hergestellt werden. Dabei kann nach allen bekannten radikalischen Polymerisationsverfahren gearbeitet werden. Neben der Polymerisation in Substanz sind insbesondere die Verfahren der Lösungspolymerisation und der Emulsionspolymerisation zu nennen, wobei die Lösungspolymerisation bevorzugt ist.

Die Polymerisation wird vorzugsweise in Wasser als Lösungsmittel durchgeführt. Sie kann jedoch auch in alkoholischen Lösungsmitteln, insbesondere C₁-C₄-Alkoholen, wie Methanol, Ethanol und Isopropanol, oder Mischungen dieser Lösungsmittel mit Wasser vorgenommen werden.

Als Polymerisationsinitiatoren eignen sich sowohl thermisch als auch photochemisch (Photoinitiatoren) zerfallende und dabei Radikale bildende Verbindungen.

Häufig werden auch Redoxinitiator-Systeme verwendet, welche aus einer Peroxoverbindung, einem Metallsalz und einem Reduktionsmittel bestehen. Beispiele für geeignete Peroxoverbindungen sind Wasserstoffperoxid, Peroxodisulfat (als Ammonium-, Natrium- oder Kaliumsalz), Peroxosulfate, sowie organische Peroxoverbindungen wie tert.-Butylhydroperoxid, Cumolhydroperoxid oder Dibenzoylperoxid. Geeignete Metallsalze sind vor allem Eisen(II)-salze wie Eisen(II)-sulfatheptahydrat. Als Reduktionsmittel sind geeignet Natriumsulfit, das Dinatriumsalz der 2-Hydroxy-2-sulfinatoessigsäure, das Dinatriumsalz der 2-Hydroxy-2-sulfonatoessigsäure, Natriumhydroxymethansulfinat, Ascorbinsäure, Iso-Ascorbinsäure oder Mischungen davon.

Unter den thermisch aktivierbaren Polymerisationsinitiatoren sind Initiatoren mit einer Zerfallstemperatur im Bereich von 20 bis 180°C, insbesondere von 50 bis 90°C, bevorzugt. Beispiele für geeignete thermische Initiatoren sind anorganische Peroxoverbindungen, wie Peroxodisulfate (Ammonium- und vorzugsweise Natriumperoxoxdisulfat), Peroxosulfate, Percarbonate und Wasserstoffperoxid; organische Peroxoverbindungen, wie Diacetylperoxid, Di-tert.-butylperoxid, Diamylperoxid, Dioctanoylperoxid, Didecanoylperoxid, Dilauroylperoxid, Dibenzoylperoxid, Bis(o-toloyl)peroxid, Succinylperoxid, tert.-Butylperneodecanoat, tert.-Butylperbenzoat, tert.-Butylperisobutyrat, tert.-Butylperpivalat, tert.-Butylperoctoat, tert.-Butylperneodecanoat, tert.-Butylperbenzoat, tert.-Butylperoxid, tert.-Butylhydroperoxid, Cumolhydroperoxid, tert.-Butylperoxi-2-ethylhexanoat und Diisopropylperoxidicarbamat; Azoverbindungen, wie 2,2'-Azobisisobutyronitril, 2,2'-Azobis(2-methylbutyronitril) und Azobis(2-amidopropan)dihydrochlorid.

Diese Initiatoren können in Kombination mit reduzierenden Verbindungen als Starter/Regler-Systeme zum Einsatz kommen. Als Beispiele für derartige reduzierende Verbindungen seien phosphorhaltige Verbindungen, wie phosphorige Säure, Hypophosphite und Phosphinate, schwefelhaltige Verbindungen, wie Natriumhydrogensulfit, Natriumsulfit und Natriumformaldehydsulfoxilat, sowie Hydrazin genannt.

Beispiele für geeignete Photoinitiatoren sind Benzophenon, Acetophenon, Benzyldialkylketone und deren Derivate.

Vorzugsweise werden thermische Initiatoren eingesetzt, wobei anorganische Peroxoverbindungen, insbesondere Natriumperoxodisulfat, bevorzugt sind. Besonders vorteilhaft kommen die Peroxoverbindungen in Kombination mit schwefelhaltigen Reduktionsmitteln, insbesondere Natriumhydrogensulfit, als Redoxinitiatorsystem zum Einsatz. Bei Verwendung dieses Starter/Regler-Systems werden Copolymere erhalten, die als Endgruppen -SO₃⁻Na⁺ und/oder -SO₄⁻Na⁺ enthalten und sich durch besondere Reinigungskraft und belagsinhibierende Wirkung auszeichnen.

Alternativ können auch phosphorhaltige Starter/Regler-Systeme verwendet werden, z.B. Hypophosphite/Phosphinate.

Die Mengen an Photoinitiator bzw. Starter/Regler-System sind auf die jeweils verwendeten Substanzen abzustimmen. Wird beispielsweise das bevorzugte System Peroxodisulfat/Hydrogensulfit verwendet, so werden üblicherweise 2 bis 6 Gew.-%, vorzugsweise 3 bis 5 Gew.-%, Peroxodisulfat und in der Regel 5 bis 30 Gew.-%, vorzugsweise 5 bis 10 Gew.-%, Hydrogensulfit, jeweils bezogen auf die Monomere a1), a2) a3) und gegebenenfalls a4), eingesetzt.

Gewünschtenfalls können auch Polymerisationsregler zum Einsatz kommen. Geeignet sind z.B. Schwefelverbindungen, wie Mercaptoethanol, 2-Ethylhexylthioglykolat, Thioglykolsäure und Dodecylmercaptan. Wenn Polymerisationsregler verwendet werden, beträgt ihre Einsatzmenge in der Regel 0,1 bis 15 Gew.-%, bevorzugt 0,1 bis 5 Gew.-% und besonders bevorzugt 0,1 bis 2,5 Gew.-%, bezogen auf Monomere a1), a2) a3) und gegebenenfalls a4).

Die Polymerisationstemperatur liegt in der Regel bei 20 bis 200°C, bevorzugt bei 20 bis 150°C und besonders bevorzugt bei 20 bis 120°C.

Die Polymerisation kann unter atmosphärischem Druck durchgeführt werden, vorzugsweise wird sie jedoch in geschlossenem System unter dem sich entwickelnden Eigendruck vorgenommen,

Die Copolymere können im sauren Zustand anfallen, sie können aber auch, falls für die Anwendung gewünscht, durch Zugabe von Basen, insbesondere von Natronlauge, bereits während der Polymerisation oder nach Beendigung der Polymerisation, neutralisiert oder teilneutralisiert werden. Der bevorzugte pH-Wert der wässrigen Copolymerlösungen liegt im Bereich von 3 bis 8,5.

Die erfindungsgemäß verwendeten Copolymere können direkt in Form der bei der Herstellung mittels Lösungsmittelpolymerisation in Wasser anfallenden wässrigen Lösungen oder in getrockneter Form (erhalten z. B. durch Sprühtrocknung, Sprühgranulierung, Fluidized Spray Drying, Walzentrocknung oder Gefriertrocknung) zum Einsatz kommen.

Neben der Komponente a) können die erfindungsgemäßen Reinigungsformulierungen als Komponente b) 0 bis 20 Gew.-% von Komponente a) verschiedene Polycarboxylate enthalten. Diese können hydrophil oder hydrophob modifiziert sein. Falls von Komponente a) verschiedene Polycarboxylate enthalten sind, sind diese im Allgemeinen in Mengen von 0,1 bis 20 Gew.-% enthalten.

Geeignet sind Alkalimetallsalze von Homo- und Copolymeren der Acrylsäure oder der Methacrylsäure. Zur Copolymerisation eignen sich monoethylenisch ungesättigte Dicarbonsäuren wie Maleinsäure, Fumarsäure, Maleinsäureanhydrid, Itaconsäure und Citraconsäure. Ein geeignetes Polymer ist insbesondere Polyacrylsäure, die bevorzugt eine Molmasse von 2000 bis 40 000 g/mol aufweist. Aufgrund ihrer überlegenen Löslichkeit kann aus dieser Gruppe die kurzkettige Polyacrylsäure, die Molmassen von 2000 bis 10 000 g/mol, insbesondere 3000 bis 8000 g/mol, aufweist, bevorzugt sein. Geeignet sind weiterhin copolymere Polycarboxylate, insbesondere solche der Acrylsäure mit Methacrylsäure und der Acrylsäure oder Methacrylsäure mit Maleinsäure, und/oder Fumarsäure.

Es können auch Copolymere aus mindestens einem Monomeren aus der Gruppe bestehend aus monoethylenisch ungesättigten C₃-C₁₀-Mono- oder Dicarbonsäuren oder deren Anhydriden, wie Maleinsäure, Maleinsäureanhydrid, Acrylsäure, Methacrylsäure, Fumarsäure, Itaconsäure und Citraconsäure mit mindestens einem hydrophil oder hydrophob modifizierten Monomeren wie nachfolgend aufgezählt eingesetzt werden.

Geeignete hydrophobe Monomere sind beispielsweise Isobuten, Diisobuten, Buten, Penten, Hexen und Styrol, Olefine mit 10 oder mehr Kohlenstoffatomen oder deren Gemische wie beispielsweise 1-Decen, 1-Dodecen, 1-Tetradecen, 1-Hexadecen, 1-Octadecen, 1-Eicosen, 1-Docosen, 1-Tetracosen und 1-Hexacosen, C₂₂-alpha-Olefin, ein Gemisch aus C₂₀-C₂₄-alpha-Olefinen und Polyisobuten mit im Mittel 12 bis 100 C-Atomen.

Geeignete hydrophile Monomere sind Monomere mit Sulfonat- oder Phosphonatgruppen, sowie nichtionische Monomere mit Hydroxyfunktion oder Alkylenoxidguppen. Beispielsweise seien genannt: Allylalkohol, Isoprenol, Methoxypolyethylenglykol(meth)acrylat, Methoxypolypropylenglykol(meth)acrylat, Methoxypolybutylenglykol(meth)acrylat, Methoxypoly(propylenoxid-co-ethylenoxid)(meth)acrylat, Ethoxypolyethylenglykol(meth)acrylat, Ethoxypolypropylenglykol(meth)acrylat, Ethoxypolybutylenglykol(meth)acrylat und Ethoxypoly(propylenoxid-co-ethylenoxid)(meth)acrylat. Die Polyalkylenglykole enthalten dabei 3 bis 50, insbesondere 5 bis 40 und vor allem 10 bis 30 Alkylenoxideinheiten.

Besonders bevorzugte Sulfonsäuregruppen-haltige Monomere sind dabei 1-Acryl-amido-1-propansulfonsäure, 2-Acrylamido-2-propansulfonsäure, 2-Acrylamido-2-methylpropansulfonsäure, 2-Methacrylamido-2-methylpropansulfonsäure, 3-Meth-acrylamido-2-hydroxypropansulfonsäure, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen-1-sulfonsäure, Styrolsulfonsäure, Vinylsulfonsäure, 3-Sulfopropylacrylat, 2-Sulfoethylmethacrylat, 3-Sulfopropylmethacrylat, Sulfomethacrylamid, Sulfomethylmethacrylamid sowie Salze der genannten Säuren, wie deren Natrium-, Kalium- oder Ammoniumsalze.

Besonders bevorzugte Phosphonatgruppen-haltige Monomere sind die Vinylphosphonsäure und ihre Salze.

Darüber hinaus können auch amphotere und kationische Polymere zusätzlich eingesetzt werden.

Als Komponente c) können die erfindungsgemäßen Reinigungsformulierungen 0 bis 50 Gew.-% eines oder mehrerer Komplexbildner enthalten. Falls Komplexbildner enthalten sind, sind diese in Mengen von 0,1 bis 50 Gew.-%, bevorzugt 1 bis 45 Gew.-% und besonders bevorzugt 1 bis 40 Gew.-% enthalten. Bevorzugte Komplexbildner sind ausgewählt aus der Gruppe bestehend aus Nitrilotriessigsäure, Ethylendiamintetraessigsäure, Diethylentriaminpentaessigsäure, Hydroxyethylethylendiamintriessigsäure und Methylglycindiessigsäure, Glutaminsäurediessigsäure, Iminodibernsteinsäure, Hydroxyiminodibernsteinsäure, Ethylendiamindibernsteinsäure, Asparaginsäurediessigsäure sowie deren Salzen. Besonders bevorzugte Komplexbildner c) sind Methylglycindiessigsäure und deren Salze.

Als Komponente d) kann das erfindungsgemäße Reinigungsmittel 0 bis 70 Gew.-% Phosphate enthalten. Enthält das Reinigungsmittel Phosphate, enthält es diese im Allgemeinen in Mengen von 1 bis 70 Gew.-%, bevorzugt von 5 bis 60 Gew.-%, besonders bevorzugt von 20 bis 55 Gew.-%.

Unter der Vielzahl der kommerziell erhältlichen Phosphate haben die Alkalimetallphosphate unter besonderer Bevorzugung von Pentanatrium- bzw. Pentakaliumtriphosphat (Natrium- bzw. Kaliumtripolyphosphat) in der Wasch- und Reinigungsmittel-Industrie die größte Bedeutung.

Als Phosphate für Geschirrreinigungsmittel geeignet sind insbesondere Alkalimetallphosphate und polymere Alkalimetallphosphate, die in Form ihrer alkalischen, neutralen oder sauren Natrium- oder Kaliumsalze zugegen sein können. Beispiele derartiger Phosphate sind Trinatriumphosphat, Tetranatriumdiphosphat, Dinatriumdihydrogendiphosphat, Pentanatriumtripolyphosphat, sogenanntes Natriumhexametaphosphat, oligomeres Trinatriumphosphat mit einem Oligomerisierungsgrad von 5 bis 1000, bevorzugt 5 bis 50, und die entsprechenden Kaliumsalze, oder Gemische von Natriumhexametaphosphat und den entsprechenden Kaliumsalzen, oder Gemische der Natrium- und Kaliumsalze. Insbesondere bevorzugt sind Tripolyphosphatsalze.

Als Komponente e) kann das erfindungsgemäße Reinigungsmittel 0 bis 60 Gew.-% Builder und Cobuilder enthalten. Enthält das Reinigungsmittel Builder und Cobuilder, enthält es diese im Allgemeinen in Mengen von 0,1 bis 60 Gew.-%. Builder und Cobuilder sind wasserlösliche oder wasserunlösliche Substanzen, deren Hauptaufgabe im Binden von Calcium- und Magnesiumionen besteht.

Dies können niedermolekulare Carbonsäuren sowie deren Salze wie Alkalicitrate, insbesondere wasserfreies Trinatriumcitrat oder Trinatriumcitratdihydrat, Alkalisuccinate, Alkalimalonate, Fettsäuresulfonate, Oxydisuccinat, Alkyl- oder Alkenyldisuccinate, Gluconsäuren, Oxadiacetate, Carboxymethyloxysuccinate, Tartratmonosuccinat, Tartratdisuccinat, Tartratmonoacetat, Tartratdiacetat und α-Hydroxypropionsäure sein. Eine weitere Substanzklasse mit Cobuildereigenschaften, welche in den erfindungsgemäßen Reinigungsmitteln enthalten sein können, stellen die Phosphonate dar. Dabei handelt es sich insbesondere um Hydroxyalkan- bzw. Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, z.B. als Hexanatriumsalz der EDTMP bzw. als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schwermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden.

Eine weitere Substanzklasse im Buildersystem sind die Silikate. Enthalten sein können kristalline schichtförmige Silikate mit der allegemeinen Formel NaMSiₓO₂ₓ₊₁ yH₂O, wobei M Natrium oder Wasserstoff bedeutet, x eine Zahl von 1,9 bis 22, vorzugsweise von 1,9 bis 4, wobei besonders bevorzugte Werte für x 2, 3 oder 4 sind und y eine Zahl von 0 bis 33, vorzugsweise 0 bis 20 ist. Daneben können amorphe Natriumsilikate mit einem SiO₂ : Na₂O-Verhältnis von 1 bis 3,5, vorzugsweise von 1,6 bis 3 und insbesondere von 2 bis 2,8 zum Einsatz kommen.

Weiterhin werden Carbonate und Hydrogencarbonate eingesetzt, von denen die Alkalimetallsalze, insbesondere Natriumsalze bevorzugt werden.

Als Komponente f) enthalten die erfindungsgemäßen Reinigungsformulierungen 0,1 bis 20 Gew.-% nichtionische Tenside, üblicher Weise schwach oder niedrig schäumende nichtionische Tenside. Diese sind bevorzugt in Anteilen von 0,1 bis 15 Gew.-%, besonders bevorzugt von 0,25 bis 10 Gew.-% enthalten.

Geeignete nichtionische Tenside umfassen die Tenside der allgemeinen Formel (III)

R¹⁸-O-(CH₂CH₂O)ₚ-(CHR¹⁷CH₂O)ₘ-R¹⁹ (III)

worin R¹⁸ ein linearer oder verzweigter Alkylrest mit 8 bis 22 C-Atomen ist, R¹⁷ und R¹⁹ unabhängig voneinander Wasserstoff oder ein linearer oder verzweigter Alkylrest mit 1-10 C-Atomen oder H sind, wobei R¹⁷ bevorzugt Methyl ist, und p und m unabhängig voneinander 0 bis 300 sind. Bevorzugt ist p = 1 - 100 und
m = 0 - 30.

Die Tenside der Formel (III) können sowohl statistische Copolymere als auch BlockCopolymere sein, bevorzugt sind sie Block-Copolymere.

Weiterhin können Di- und Multiblockcopolymerisate, aufgebaut aus Ethylenoxid und Propylenoxid, eingesetzt werden, die beispielsweise unter der Bezeichnung Pluronic^{®} (BASF SE) oder Tetronic^{®} (BASF Corporation) kommerziell erhältlich sind. Weiterhin können Umsetzungsprodukte aus Sorbitanestern mit Ethylenoxid und/oder Propylenoxid verwendet werden. Ebenfalls eignen sich Aminoxide oder Alkylglycoside. Eine Übersicht geeigneter nichtionischer Tenside gibt die EP-A 851 023 sowie die DE-A 198 19 187.

Es können auch Gemische mehrerer verschiedener nichtionischer Tenside enthalten sein.

Als Komponente g) können die erfindungsgemäßen Reinigungsformulierungen 0 bis 30 Gew.-% Bleichmittel, gegebenenfalls Bleichaktivatoren und gegebenenfalls Bleichkatalysatoren enthalten. Falls die Reinigungsformulierungen Bleichmittel, Bleichaktivatoren oder Bleichkatalysatoren enthält, enthält sie diese in Mengen von insgesamt 0,1 bis 30 Gew.-%, bevorzugt 1 bis 30 Gew.-% und besonders bevorzugt 5 bis 30 Gew.-%.

Bleichmittel unterteilen sich in Sauerstoffbleichmittel und chlorhaltige Bleichmittel. Verwendung als Sauerstoffbleichmittel finden Alkalimetallperborate und deren Hydrate sowie Alkalimetallpercarbonate. Bevorzugte Bleichmittel sind hierbei Natriumperborat in Form des Mono- oder Tetrahydrats, Natriumpercarbonat oder die Hydrate von Natriumpercarbonat.

Ebenfalls als Sauerstoffbleichmittel einsetzbar sind Persulfate und Wasserstoffperoxid.

Typische Sauerstoffbleichmittel sind auch organische Persäuren wie beispielsweise Perbenzoesäure, Peroxy-alpha-Naphthoesäure, Peroxylaurinsäure, Peroxystearinsäure, Phthalimidoperoxycapronsäure, 1,12-Diperoxydodecandisäure, 1,9-Diperoxyazelainsäure, Diperoxoisophthalsäure oder 2-Decyldiperoxybutan-1,4-disäure.

Außerdem können auch folgende Sauerstoffbleichmittel in der Reinigerformulierung Verwendung finden:
Kationische Peroxysäuren, die in den Patentanmeldungen US 5,422,028, US 5,294,362 sowie US 5,292,447 beschrieben sind, und Sulfonylperoxysäuren, die in der Patentanmeldung US 5,039,447 beschrieben sind.

Chlorhaltige Bleichmittel sowie die Kombination von chlorhaltigen Bleichmittel mit peroxidhaltigen Bleichmitteln können ebenfalls verwendet werden. Bekannte chlorhaltige Bleichmittel sind beispielsweise 1,3-Dichloro-5,5-dimethylhydantoin, N-Chlorosulfamid, Chloramin T, Dichloramin T, Chloramin B, N,N'-Dichlorbenzoylharnstoff, p-Toluolsulfondichloroamid oder Trichlorethylamin. Bevorzugte chlorhaltige Bleichmittel sind Natriumhypochlorit, Calciumhypochlorit, Kaliumhypochlorit, Magnesiumhypochlorit, Kaliumdichloroisocyanurat oder Natriumdichloroisocyanurat.

Chlorhaltige Bleichmittel werden in Mengen von im Allgemeinen 0,1 bis 20 Gew.-%, bevorzugt von 0,2 bis 10 Gew.-%, besonders bevorzugt von 0,3 bis 8 Gew.-%, bezogen auf die gesamte Reinigerformulierung, eingesetzt.

Weiterhin können in geringen Mengen Bleichmittelstabilisatoren wie beispielsweise Phosphonate, Borate, Metaborate, Metasilikate oder Magnesiumsalze zugegeben werden.

Bleichaktivatoren sind Verbindungen, die unter Perhydrolysebedingungen aliphatische Peroxocarbonsäuren mit vorzugsweise 1 bis 10 Kohlenstoffatomen, insbesondere 2 bis 4 Kohlenstoffatomen, und/oder substituierte Perbenzoesäure ergeben. Geeignet sind Verbindungen, die eine oder mehrere N- bzw. O-Acylgruppen und/oder gegebenenfalls substituierte Benzoylgruppen enthalten, beispielsweise Substanzen aus der Klasse der Anhydride, Ester, Imide, acylierten Imidazole oder Oxime. Beispiele sind Tetraacetylethylendiamin (TAED), Tetraacetylmethylendiamin (TAMD), Tetraacetylglykoluril (TAGU), Tetraacetylhexylendiamin (TAHD), N-Acylimide, wie beispielsweise N-Nonanoylsuccinimid (NOSI), acylierte Phenolsulfonate, wie beispielsweise n-Nonanoyl- oder Isononanoyloxybenzolsulfonate (n- bzw. iso-NOBS), Pentaacetylglucose (PAG), 1,5-Diacetyl-2,2-dioxohexahydro-1,3,5-triazin (DADHT) oder Isatosäureanhydrid (ISA). Ebenfalls als Bleichaktivatoren eignen sich Nitrilquats wie beispielsweise N-Methyl-Morpholinium-Acetonitril-Salze (MMA-Salze) oder Trimethylammoniumacetonitril-Salze (TMAQ-Salze).

Bevorzugt eignen sich Bleichaktivatoren aus der Gruppe bestehend aus mehrfach acylierten Alkylendiaminen, besonders bevorzugt TAED, N-Acylimide, besonders bevorzugt NOSI, acylierte Phenolsulfonate, besonders bevorzugt n- oder iso-NOBS, MMA und TMAQ.

Bleichaktivatoren werden in Mengen von im Allgemeinen 0,1 bis 10 Gew.-%, bevorzugt von 1 bis 9 Gew.-%, besonders bevorzugt von 1,5 bis 8 Gew.-%, bezogen auf die gesamte Reinigerformulierung, eingesetzt.

Zusätzlich zu den konventionellen Bleichaktivatoren oder an deren Stelle können auch sogenannte Bleichkatalysatoren enthalten sein. Bei diesen Stoffen handelt es sich um bleichverstärkende Übergangsmetallsalze bzw. Übergangsmetallkomplexe wie beispielsweise Mangan-, Eisen-, Cobalt-, Ruthenium- oder Molybdän-Salenkomplexe oder carbonylkomplexe. Auch Mangan-, Eisen-, Cobalt-, Ruthenium-, Molybdän-, Titan-, Vanadium- und Kupfer-Komplexe mit stickstoffhaltigen Tripod-Liganden sowie Cobalt-, Eisen-, Kupfer- und Ruthenium-Aminkomplexe sind als Bleichkatalysatoren verwendbar.

Als Komponente h) können die erfindungsgemäßen Reinigungsformulierungen 0 bis 8 Gew.-% Enzyme enthalten. Falls die Reinigungsformulierungen Enzyme enthalten, enthalten sie diese im Allgemeinen in Mengen von 0,1 bis 8 Gew.-%. Dem Reinigungsmittel können Enzyme zugesetzt werden, um die Leistung der Reinigungsmittel zu steigern oder unter milderen Bedingungen die Reinigungsleistung in gleicher Qualität zu gewährleisten. Zu den am häufigsten verwendeten Enzymen gehören Lipasen, Amylasen, Cellulasen und Proteasen. Weiterhin können beispielsweise auch Esterasen, Pectinasen, Lactasen und Peroxidasen eingesetzt werden.

Des Weiteren können die erfindungsgemäßen Reinigungsmittel als Komponenten i) 0 bis 50 Gew.-% einen oder mehrere weitere Zusatzstoffe wie anionische oder zwitterionische Tenside, Alkaliträger, Korrosionsinhibitoren, Entschäumer, Farbstoffe, Duftstoffe, Füllstoffe, organische Lösungsmittel, Tablettierhilfsmittel, Disintegrationsmittel, Verdicker, Löslichkeitsvermittler und Wasser enthalten. Falls die Reinigungsformulierung weitere Zusatzstoffe enthält, sind diese im Allgemeinen in Mengen von 0,1 bis 50 Gew.-% enthalten.

Die Formulierungen können anionische oder zwitterionische Tenside enthalten, bevorzugt in Abmischung mit nichtionischen Tensiden. Geeignete anionische und zwitterionischer Tenside sind in EP-A 851 023 sowie DE-A 198 19 187 genannt.

Als weitere Bestandteile der Reinigerformulierung können Alkaliträger zugegen sein. Neben den bereits bei den Buildersubstanzen genannten Ammonium- oder Alkalimetallcarbonate, Ammonium- oder Alkalimetallhydrogencarbonate und Ammonium- oder Alkalimetallsesquicarbonate können als Alkaliträger auch Ammonium- oder Alkalimetallhydroxide, Ammonium- oder Alkalisilikate und Ammonium- oder Alkalimetasilikate sowie Gemische der vorgenannten Stoffe eingesetzt werden.

Als Korrosionsinhibitoren können Silberschutzmittel aus der Gruppe der Triazole, der Benzotriazole, der Bisbenzotriazole, der Aminotriazole, der Alkylaminotriazole und der Übergangsmetallsalze oder- komplexe eingesetzt werden.

Zur Verhinderung von Glaskorrosion, das sich durch Trübungen, Irisieren, Schlieren und Linien auf den Gläsern bemerkbar macht, werden Glaskorrosionsinhibitoren eingesetzt. Bevorzugte Glaskorrosionsinhibitoren sind aus der Gruppe der Magnesium- Zink und Bismuth-Salze und Komplexe.

Paraffinöle und Silikonöle können optional als Entschäumer und zum Schutz von Kunststoff- und Metalloberflächen eingesetzt werden. Entschäumer werden generell in Anteilen von 0,001 Gew.-% bis 5 Gew.-% eingesetzt. Außerdem können Farbstoffe wie beispielsweise Patentblau, Konservierungsmittel wie beispielsweise Kathon CG, Parfüme und sonstige Duftstoffe der erfindungsgemäßen Reinigungsformulierung zugesetzt werden.

Ein geeigneter Füllstoff ist beispielsweise Natriumsulfat.

Die erfindungsgemäßen Reinigungsformulierungen können in flüssiger oder fester Form, ein- oder mehrphasig, als Tabletten oder in Form anderer Dosiereinheiten, verpackt oder unverpackt bereitgestellt werden.

Die Erfindung wird durch die nachfolgenden Beispiele näher erläutert.

### Beispiele

Die Bestimmung der Molekulargewichte erfolge in allen Fällen mittels Gelpermeationschromatographie (GPC). Dabei wurden 2 Säulen (Suprema Linear M) und eine Vorsäule (Suprema Vorsäule) alle der Marke Suprema-Gel (HEMA) von der Firma Polymer Standard Services (Mainz, Deutschland) bei 35°C mit einer Flußrate von 0,8 ml/min betrieben. Der Eluent waren die mit TRIS bei pH 7 gepufferten wässrigen Lösung, die mit 0,15 M NaCl und 0,01 M NaN3 versetzt waren. Die Kalibrierung erfolgte mit einem Na-PAA Standard, deren integrale Molekulargewichtsverteilungskurve durch SEC- Laserlichtstreukopplung bestimmt worden war, nach dem Kalibrierverfahren von M.J.R. Cantow u.a. (J.Polym.Sci. ,A-1, 5(1967)1391-1394), allerdings ohne die dort vorgeschlagene Konzentrationskorrektur. Alle Proben wurden mit einer 50%igen Natronlauge auf pH 7 eingestellt, ein Teil dieser Lösung wurde mit VE-Wasser auf einen Feststoffgehalt von 1,5 mg/mL verdünnt, und 12 Stunden lang gerührt. Anschließend wurden die Proben filtriert. Jeweils 100 µL wurden mittels einer Sartorius Minisart RC 25 (0.2 µm) eingespritzt.

### Vergleichsbeispiel V1

In einem Reaktor wurden 503,9 g VE-Wasser zusammen mit 2,36 g einer 50 gew.-%igen wässrigen Lösung von Phosphoriger Säure vorgelegt. Anschließend wurde unter Stickstoff-Atmosphäre auf 100 °C Innentemperatur erhitzt. Bei dieser Temperatur wurden gleichzeitig 58,9 g einer 10,0 gew.-%igen wässrigen Natriumperoxodisulfat-Lösung, 39,2 g einer 40 gew.-%igen wässrigen Natriumbisulfit-Lösung und 394,0 g eines Gemischs bestehend aus 10,9 Gew.-% destillierter Acrylsäure, 11,2 Gew.-% Methoxypolyethylenglykolmethacrylat (M_{w} = 1086 g/mol), 11,9 Gew.-% destillierter Methacrylsäure, 4,5 Gew.-% 2-Sulfoethylmethacrylsäure-Natriumsalz und 61,5% Gew.-% VE-Wasser, separat und parallel unter Rühren zudosiert. Das Monomer-Gemisch wurde innerhalb von 5 Stunden, Natriumperoxodisulfat innerhalb von 5,25 Stunden und Natriumbisulfit innerhalb von 5 Stunden zudosieren. Anschließend wurde noch 2 Stunden bei 100 °C nachpolymerisiert. Danach wurde auf Raumtemperatur abgekühlt und danach mit 87,0 g einer 50 gew.-%igen wässrigen Natronlauge auf einen pH-Wert von 7,2 eingestellt. pH- und K-Wert, Molekulargewichte Mₙ und M_{w} sowie der Feststoffgehalt wurden bestimmt und das Produktgemisch visuell beurteilt.

### Vergleichsbeispiel V2

In einem Reaktor wurden 904,6 g VE-Wasser zusammen mit 2,36 g einer 50 gew.-%igen wässrigen Lösung von Phosphoriger Säure vorgelegt. Anschließend wurde unter Stickstoff-Atmosphäre auf 100 °C Innentemperatur erhitzt. Bei dieser Temperatur wurden gleichzeitig 117,8 g einer 10,2 gew.-%igen wässrigen Natriumperoxodisulfat-Lösung, 78,4 g einer 40 gew.-%igen wässrigen Natriumbisulfit-Lösung und 647,2 g eines Gemischs bestehend aus 13,3 Gew.-% destillierter Acrylsäure, 13,7 Gew.-% Methoxypolyethylenglykolmethacrylat (M_{w} = 1086 g/mol), 14,5 Gew.-% destillierter Methacrylsäure und 58,5 Gew.-% VE-Wasser und 140,8 g einer 25 gew.-%igen Natriumvinylsulfonat-Lösung, separat und parallel unter Rühren zudosiert. Das Monomer-Gemisch wurde innerhalb von 5 Stunden, Natriumperoxodisulfat innerhalb von 5,25 Stunden und Natriumbisulfit innerhalb von 5 Stunden zudosiert. Anschließend wurde noch 2 Stunden bei 100 °C nachpolymerisiert. Danach wurde auf Raumtemperatur abgekühlt und danach mit 178,8 g einer 50 gew.-%igen wässrigen Natronlauge auf einen pH -Wert von 7,2 eingestellt. pH- und K-Wert, Molekulargewichte Mₙ und M_{w} sowie der Feststoffgehalt wurden bestimmt und das Produktgemisch visuell beurteilt.

### Beispiel 1

In einem Reaktor wurden 375,0 g VE-Wasser vorgelegt und unter Stickstoff-Atmosphäre auf 90°C Innentemperatur erhitzt. Bei dieser Temperatur wurden gleichzeitig 321,0 g einer 7 gew.-%igen wässrigen Natriumperoxodisulfat-Lösung, 60,0 g einer 40 gew.-%igen wässrigen Natriumbisulfit-Lösung, 150,0 g eines Gemischs bestehend aus 12,0 Gew.-% destillierter Methacrylsäure, 38,0 Gew.-% Methoxypolyethylenglykolmethacrylat (M_{w} = 1086 g/mol) und 50,0 Gew.-% VE-Wasser, 1004,0 g eines Gemischs bestehend aus 44,8 Gew.-% destillierter Acrylsäure, 22,4 Gew.-% 2-Acrylamido-2-methylpropansulfonsäure, 0,002 Gew.-% 4-Methoxyphenol, 17,5 Gew.-% einer 25 gew.-%igen wässrigen Natronlauge und 15,3 Gew.-% VE-Wasser, separat und parallel unter Rühren zudosiert. Die Monomere wurden innerhalb von 4 Stunden, Natriumperoxodisulfat innerhalb von 4,75 Stunden und Natriumbisulfit innerhalb von 4 Stunden zudosiert. Nach Ende des Acrylsäure-Zulaufs wurden 150,0 g einer 25 gew.-%igen wässrigen Natriumhydroxid-Lösung innerhalb von 2 Stunden bei 90° C Innentemperatur zugegeben. Nachfolgend wurde noch 1 Stunde bei 90 °C nachpolymerisiert. Danach wurde auf Raumtemperatur abgekühlt und mit 115,5 g einer 50 gew.-%igen wässrigen Natronlauge die Polymer-Lösung auf pH 4,5 eingestellt. pH- und K-Wert, Molekulargewichte Mₙ und M_{w} sowie der Feststoffgehalt wurden bestimmt und das Produktgemisch visuell beurteilt.

### Beispiel 2

In einem Reaktor wurden 375,0 g VE-Wasser vorgelegt. Anschließend wurde unter Stickstoff-Atmosphäre auf 90 °C Innentemperatur erhitzt. Bei dieser Temperatur wurden gleichzeitig 321,4 g einer 7 gew.-%igen wässrigen Natriumperoxodisulfat-Lösung, 60,0 g einer 40 gew.-%igen wässrigen Natriumbisulfit-Lösung, 300,0 g eines Gemischs bestehend aus 18,0 Gew.-% destillierter Methacrylsäure, 57,0 Gew.-% Methoxypolyethylenglykolmethacrylat (M_{w} = 1086 g/mol) und 25,0 Gew.-% VE-Wasser, 853,0 g eines Gemischs bestehend aus 35,2 Gew.-% destillierter Acrylsäure, 26,4 Gew.-% 2-Acrylamido-2-methylpropansulfonsäure, 0,002 Gew.-% 4-Methoxyphenol, 20,4 Gew.-% einer 25 gew.-%igen wässrigen Natronlauge und 18,0 Gew.-% VE-Wasser separat und parallel unter Rühren zudosiert. Die Monomere wurden innerhalb von 4 Stunden, Natriumperoxodisulfat innerhalb von 4,75 Stunden und Natriumbisulfit innerhalb von 4 Stunden zudosiert. Nach Ende des Acrylsäure-Zulaufs wurden 150,0 g einer 25 gew.-%igen wässrigen Natriumhydroxid-Lösung in 2 Stunden bei 90° C Innentemperatur zugeben. Nachfolgend wurde 1 Stunde bei 90 °C nachpolymerisiert. Danach wurde die Polymer-Lösung auf Raumtemperatur abgekühlt und mit 67,3 g einer 50 gew.-%igen wässrigen Natronlauge auf pH 4,5 eingestellt. pH- und K-Wert, Molekulargewichte Mₙ und M_{w} sowie der Feststoffgehalt wurden bestimmt und das Produktgemisch visuell beurteilt.

### Beispiel 3

In einem Reaktor wurden 375,0 g VE-Wasser vorgelegt. Anschließend wurde unter Stickstoff-Atmosphäre auf 90 °C Innentemperatur erhitzt. Bei dieser Temperatur wurden gleichzeitig 321,0 g einer 7 gew.-%igen wässrigen Natriumperoxodisulfat-Lösung, 60,0 g einer 40 gew.-%igen wässrigen Natriumbisulfit-Lösung, 225,0 g eines Gemischs bestehend aus 15,8 Gew.-% destillierter Methacrylsäure, 50,2 Gew.-% Methoxypolyethylenglykolmethacrylat (M_{w} = 1086 g/mol) und 33,0 Gew.-% VE-Wasser, 869,4 g eines Gemischs bestehend aus 51,8 Gew.-% destillierter Acrylsäure, 17,2 Gew.-% 2-Acrylamido-2-methylpropansulfonsäure, 0,002 Gew.-% 4-Methoxyphenol, 13,4 Gew.-% einer 25 gew.-%igen wässrigen Natronlauge und 17,6 Gew.-% VE-Wasser separat und parallel unter Rühren zudosiert. Die Monomere wurden innerhalb von 4 Stunden, Natriumperoxodisulfat innerhalb von 4,75 Stunden und Natriumbisulfit innerhalb von 4 Stunden zudosiert. Nach Ende des Acrylsäure-Zulaufs wurden 150,0 g einer 25 gew.-%igen wässrigen Natriumhydroxid-Lösung in 2 Stunden bei 90 °C Innentemperatur zugegeben. Nachfolgend wurde 1 Stunde bei 90 °C nachpolymerisiert. Danach wurde die Polymer-Lösung auf Raumtemperatur abkühlt und mit 115,5 g einer 50 gew.-%igen wässrigen Natronlauge auf pH 4,5 eingestellt. pH- und K-Wert, Molekulargewichte Mₙ und M_{w} sowie der Feststoffgehalt wurden bestimmt und das Produktgemisch visuell beurteilt.

### Beispiel 4

In einem Reaktor wurden 375,0 g VE-Wasser vorgelegt und unter Stickstoff-Atmosphäre auf 90°C Innentemperatur erhitzt. Bei dieser Temperatur wurden gleichzeitig 321,0 g einer 7 gew.-%igen wässrigen Natriumperoxodisulfat-Lösung, 60,0 g einer 40 gew.-%igen wässrigen Natriumbisulfit-Lösung, 113,0 g eines Gemischs bestehend aus 15,8 Gew.-% destillierter Methacrylsäure, 50,2 Gew.-% Methoxypolyethylenglykolmethacrylat (M_{w} = 1086 g/mol) und 33,0 Gew.-% VE-Wasser, 809,7 g eines Gemischs bestehend aus 74,1 Gew.-% destillierter Acrylsäure, 9,4 Gew.-% 2-Acrylamido-2-methylpropansulfonsäure, 0,002 Gew.-% 4-Methoxyphenol, 7,2 Gew.-% einer 25 gew.-%igen wässrigen Natronlauge und 9,3 Gew.-% VE-Wasser, separat und parallel unter Rühren zudosieren. Die Monomere wurden innerhalb von 4 Stunden, Natriumperoxodisulfat innerhalb von 4,75 Stunden und Natriumbisulfit innerhalb von 4 Stunden zudosiert. Nach Ende des Acrylsäure-Zulaufs wurden 150,0 g einer 25 gew.-%igen wässrigen Natronlauge innerhalb von 2 Stunden bei 90° C Innentemperatur zugegeben. Nachfolgend wurde 1 Stunde bei 90 °C nachpolymerisiert. Danach wurde die Polymer-Lösung auf Raumtemperatur abgekühlt und mit 115,5 g einer 50 gew.-%igen Natronlauge auf pH 4,5 eingestellt. pH- und K-Wert, Molekulargewichte Mₙ und M_{w} sowie der Feststoffgehalt wurden bestimmt und das Produktgemisch visuell beurteilt.

### Beispiel 5

In einem Reaktor wurden 375,0 g VE-Wasser vorgelegt und unter Stickstoff-Atmosphäre auf 90 °C Innentemperatur erhitzt. Bei dieser Temperatur wurden gleichzeitig 321,0 g einer 7 gew.-%igen wässrigen Natriumperoxodisulfat-Lösung, 60,0 g einer 40 gew.-%igen wässrigen Natriumbisulfit-Lösung, 150,0 g einer 50 gew.-%igen wässrigen Methoxypolyethylenglykolmethacrylat (M_{w} = 1086 g/mol)-Lösung und 1004,0 g eines Gemischs bestehend aus 44,8 Gew.-% destillierter Acrylsäure, 22,4 Gew.-%, 2-Acrylamido-2-methylpropansulfonsäure, 0,001 Gew.-% 4-Methoxyphenol, 17,5 Gew.-% einer 25 gew.-%igen wässrigen Natronlauge und 15,3 Gew.-% VE-Wasser, separat und parallel unter Rühren zudosiert. Die Monomere wurden innerhalb von 4 Stunden, Natriumperoxodisulfat innerhalb von 4,75 Stunden und Natriumbisulfit innerhalb von 4 Stunden zudosiert. Nach Ende des Starter-Zulaufs wurden 150,0 g einer 25 gew.-%igen wässrigen Natriumhydroxid-Lösung in 2 Stunden bei 90° C Innentemperatur zugegeben. Nachfolgend wurde 1 Stunde bei 90 °C nachpolymerisiert. Danach wurde die Polymer-Lösung auf Raumtemperatur abgekühlt und mit 115,5 g einer 50 gew.-%igen wässrigen Natronlauge auf pH 4,5 eingestellt. pH- und K-Wert, Molekulargewichte Mₙ und M_{w} sowie der Feststoffgehalt wurden bestimmt und das Produktgemisch visuell beurteilt.

### Beispiel 6

In einem Reaktor wurden 375,0 g VE-Wasser vorgelegt. Anschließend wurde unter Stickstoff-Atmosphäre auf 90 °C Innentemperatur erwärmt. Bei dieser Temperatur wurden gleichzeitig 321,0 g einer 7 gew.-%igen wässrigen Natriumperoxodisulfat-Lösung, 60,0 g einer 40 gew.-%igen wässrigen Natriumbisulfit-Lösung, 150,0 g von einer 50 gew.-%igen wässrigen Methoxypolyethylenglykolmethacrylat-Lösung (M_{w} = 2086 g/mol) und 1004,0 g von einem Gemisch bestehend aus 44,8 Gew.-% destillierter Acrylsäure, 22,4 Gew.-% 2-Acrylamido-2-methylpropansulfonsäure, 0,002 Gew.-% 4-Methoxyphenol, 17,5 Gew.-% einer 25 gew.-%igen wässrigen Natronlauge und 15,3 Gew.-% VE-Wasser, separat und parallel unter Rühren zudosiert. Die Monomere wurden innerhalb von 4 Stunden, Natriumperoxodisulfat innerhalb von 4,75 Stunden und Natriumbisulfit innerhalb von 4 Stunden zudosiert. Nach Ende des Acrylsäure-Zulaufs wurden 150,0 g einer 25 gew.-%igen wässrigen Natriumhydroxid-Lösung innerhalb von 2 Stunden bei 90° C Innentemperatur zugeben. Nachfolgend wurde 1 Stunde bei 90 °C nachpolymerisiert. Danach wurde auf Raumtemperatur abgekühlt und mit 115,5 g einer 50 gew.-%igen wässrigen Natronlauge die Polymerlösung auf pH 4,5 eingestellt. pH- und K-Wert, Molekulargewichte Mₙ und M_{w} sowie der Feststoffgehalt wurden bestimmt und das Produktgemisch visuell beurteilt.

### Beispiel 7

In einem Reaktor wurden 375,0 g VE-Wasser vorgelegt und unter Stickstoff-Atmosphäre auf 90 °C Innentemperatur erhitzt. Bei dieser Temperatur wurden gleichzeitig 321,0 g einer 7 gew.-%igen wässrigen Natriumperoxodisulfat-Lösung, 60,0 g einer 40 gew.-%igen wässrigen Natriumbisulfit-Lösung, 150,0 g einer 50 gew.-%igen wässrigen Methoxypolyethylenglykolmethacrylat (M_{w} = 1086 g/mol)-Lösung und 1004,0 g eines Gemischs bestehend aus 44,8 Gew.-% destillierter Acrylsäure, 22,4 Gew.-% 2-Acrylamido-2-methylpropansulfonsäure, 0,001 Gew.-% 4-Methoxyphenol, 17,5 Gew.-% einer 25 gew.-%igen wässrigen Natronlauge und 15,3 Gew.-% VE-Wasser, separat und parallel unter Rühren zudosiert. Die Monomere wurden innerhalb von 4 Stunden, Natriumperoxodisulfat innerhalb von 4,75 Stunden und Natriumbisulfit innerhalb von 4 Stunden zudosiert. Nach Ende des Starter-Zulaufs wurden 150,0 g einer 25 gew.-%igen wässrigen Natriumhydroxid-Lösung innerhalb von 2 Stunden bei 90 °C Innentemperatur zugegeben. Anschließend wurde 1 Stunde bei 90 °C nachpolymerisiert. Danach wurde die Polymer-Lösung auf Raumtemperatur abgekühlt und mit 115,5 g einer 50 gew.-%igen wässrigen Natronlauge auf pH 4,5 eingestellt. pH- und K-Wert, Molekulargewichte Mₙ und M_{w} sowie der Feststoffgehalt wurden bestimmt und das Produktgemisch visuell beurteilt.

### Beispiel 8

In einem Reaktor wurden 375,0 g VE-Wasser vorgelegt und unter Stickstoff-Atmosphäre auf 90 °C Innentemperatur erwärmt. Bei dieser Temperatur wurden gleichzeitig 321,0 g einer 7 gew.-%igen wässrigen Natriumperoxodisulfat-Lösung, 60,0 g einer 40 gew.-%igen wässrigen Natriumbisulfit-Lösung, 150,0 g einer 50 gew.-%igen wässrigen Methoxypolyethylenglykolmethacrylat-Lösung (M_{w} = 2086 g/mol) und 1004,0 g eines Gemischs bestehend aus 44,8 Gew.-% destillierter Acrylsäure, 22,4 Gew.-% 2-Acrylamido-2-methylpropansulfonsäure, 0,002 Gew.-% 4-Methoxyphenol, 17,5 Gew.-% einer 25 gew.-%igen wässrigen Natronlauge und 15,3 Gew.-% VE-Wasser, separat und parallel unter Rühren zudosiert. Die Monomere wurden innerhalb von 4 Stunden, Natriumperoxodisulfat innerhalb von 4,75 Stunden und Natriumbisulfit innerhalb von 4 Stunden zudosiert. Nach Zulaufende von Acrylsäure wurden 150,0 g einer 25 gew.-%igen wässrigen Natriumhydroxid-Lösung in 2 Stunde bei 90 °C Innentemperatur zugegeben. Nachfolgend wurde 1 Stunde bei 90 °C nachpolymerisiert. Danach wurde auf Raumtemperatur abgekühlt und mit 115,5 g einer 50 gew.-%igen wässrigen Natronlauge die Polymerlösung auf pH 4,5 eingestellt. pH- und K-Wert, Molekulargewichte Mₙ und M_{w} sowie der Feststoffgehalt wurden bestimmt und das Produktgemisch visuell beurteilt.

Die Zusammensetzung der Polymere ist in Tabelle 1 wiedergegeben.

**Tabelle 1**

| Beispiel | Monomerzusammensetzung des Copolymers | Monomer-Anteile [Gew%] |
|---|---|---|
| V1 | AS/MAS/SEMA/MPEGMA(1000) | 28,3 : 31,0 : 29,2 : 11,6 |
| V2 | AS/MAS/VS/MPEGMA(1000) | 28,3 : 31,0 : 29,2 : 11,6 |
| 1 | AS/MAS/AMPS/MPEGMA(1000) | 60,0 : 2,4 : 30,0 : 7,6 |
| 2 | AS/MAS/AMPS/MPEGMA(1000) | 40,0 : 7,2 : 30,0 : 22,8 |
| 3 | AS/MAS/AMPS/MPEGMA(1000) | 60,0 : 4.8 : 20,0 : 15,2 |
| 4 | AS/MAS/AMPS/MPEGMA(1000) | 80,0 : 2,4 : 10,0 : 7,6 |
| 5 | AS/AMPS/MPEGMA(1000) | 60:30:10 |
| 6 | AS/AMPS/MPEGMA(2000) | 60:30:10 |

| | | |
|---|---|---|
| AS = Acrylsäure MAS = Methacrylsäure AMPS = 2-Acrylamido-2-methylpropylsulfonsäure MPEGMA(1000)= Methylpolyethylenglykolether mit im Mittel 22 Ethylenoxid-Einheiten. MPEGMA(2000)= Methylpolyethylenglykolether mit im Mittel 44 Ethylenoxid-Einheiten | | |

Die Analytischen Daten der Polymere sind in Tabelle 2 wiedergegeben.

**Tabelle 2**

| Beispiel | Feststoffgehalt [%]^{a} | K Wert^{b} (pH 7) | pH (tq) | Mw^{c} | Visuelle Beurteilung |
|---|---|---|---|---|---|
| V1 | 18,1 | 31,9 | 7,2 | 14.800 | klare, leicht gelbliche, viskose Lösung |
| V2 | 18,8 | 22,3 | 7,2 | 5.930 | klare, leicht gelbliche, viskose Lösung |
| 1 | 41,1 | 42,6 | 4,5 | 22.400 | klare, gelbliche, viskose Lösung |
| 2 | 41,2 | 40,6 | 4,5 | 19.900 | klare, gelbliche viskose Lösung |
| 3 | 41,6 | 45,9 | 4,6 | 26.400 | klare, gelbliche, viskose Lösung |
| 4 | 44,2 | 48,1 | 4,5 | 27.900 | klare, gelbliche, viskose Lösung |
| 5 | 40,3 | 40,0 | 4,5 | n.b. | klare, farbloses, viskose Lösung |
| 6 | 40,8 | 41,0 | 4,5 | n.b. | klare, hell gelbliche, viskose Lösung |

| | | | | | |
|---|---|---|---|---|---|
| ^{a)} ISO 3251, (0.25 g, 150°C, 2h) ^{b)} bestimmt durch Fikentscher Methode mit einer 1%iger Lösung in VE-Wasser ^{c)} bestimmt durch Gel Permeation Chromatographie | | | | | |

Die Polymere wurden in den folgenden Phosphat-freien Formulierungen PF1 und PF2, sowie in der Phosphat-basierten Formulierung P1 getestet. Die Zusammensetzung der Prüf-Formulierungen ist in Tabelle 3 (Angaben in Gew.-%) wiedergegeben.

**Tabelle 3**

| | **PF 1** | **PF 2** | **P1** |
|---|---|---|---|
| Protease | 1 | 2 | 2 |
| Amylase | 0,2 | 0,5 | 0,5 |
| Tensid | 5 | 5 | 4,5 |
| Polymer | 10 | 14 | 6,5 |
| Natriumpercarbonat | 10,5 | 12,5 | 12,5 |
| Tetraacetylethylendiamin | 4 | 4 | 4 |
| Natriumdisilikat | 2 | 5 | 4 |
| Natriumtripolyphosphat | | | 40 |
| Soda Schwer | 18,8 | 25 | 25 |
| Natriumcitrat-Dihydrat | 33 | 25 | |
| Zitronensäure | | 5 | |
| Methylglycindiessigsäure | 15 | 0 | |
| Hydroxyethan-(1,1-diphosphonsäure) | 0,5 | 2 | 1 |

| | | | |
|---|---|---|---|
| Angaben in Gew.-% | | | |

Dabei wurden folgende Versuchbedingungen eingehalten:

| | |
|---|---|
| Geschirrspüler: | Miele G 1222 SCL |
| Programm: | 65°C (mit Vorspülen) |
| Spülgut: | 3 Messer (WMF Tafelmesser Berlin, Monoblock) |
| | 3 Trinkglas Amsterdam 0,2L |
| | 3 FRÜHSTÜCKSTELLER "OCEAN BLAU" (MELAMIN) |
| | 3 Porzellanteller: FAHNENTELLER FLACH 19 CM |
| Anordnung: | Messer in der Besteckschublade, Gläser im oberen Korb, Teller im unteren Korb einsortiert |
| Geschirrspülmittel: | 21 g |
| Schmutzzugabe: | 50 g Ballastschmutz wird aufgetaut mit der Formulierung nach dem Vorspülen dosiert, Zusammensetzung siehe unten |
| Klarspültemperatur: | 65°C |
| Wasserhärte: | 21 °dH (Ca/Mg):HCO3 (3:1):1.35 |
| Spülcyclen: | 15; dazwischen jeweils 1 h Pause (10 min geöffnete Tür, 50 min geschlossene Tür) |
| Auswertung: | Visuell nach 15 Spülcyclen |

Die Bewertung des Spülguts erfolgte nach 15 Cyclen in einer abgedunkelten Kammer unter Licht hinter einer Lochblende unter Verwendung einer Notenskala von 10 (sehr gut) bis 1 (sehr schlecht). Vergeben wurden sowohl Noten von 1 - 10 für Spotting (sehr viele, intensive spots = 1 bis keine Spots = 10) als auch für Belag die Noten 1 - 10 (1 = sehr starker Belag, 10 = kein Belag).

Zusammensetzung des Ballastschmutzes:
Stärke: 0,5 % Kartoffelstärke, 2,5 % Bratensoße
Fett: 10,2 % Margarine
Protein: 5,1 % Eigelb, 5,1 % Milch
Andere: 2,5 % Tomatenketchup, 2,5 % Senf, 0,1 % Benzoesäure, 71,4 % Wasser

### Ergebnis:

Insbesondere auf Glas und Messer zeigten die erfindungsgemäßen Copolymere eine gegenüber den Vergleichsbeispielen verbesserte Wirksamkeit.

In den nachfolgenden Tabellen sind die addierten Noten für Belagsbildung und Spotting auf Messern und Trinkgläsern aufgeführt.

Phosphatfreie Formulierung PF 1

| Polymer | Messer (S + B) | Gläser (S + B) | Summe (max 40) |
|---|---|---|---|
| V1 | 12 | 12 | 24 |
| V2 | 11 | 11 | 22 |
| 1 | 13 | 13 | 26 |
| 2 | 13 | 15 | 28 |
| 3 | 14 | 14 | 28 |
| 4 | 16 | 14 | 30 |
| 5 | 15 | 14 | 29 |
| 6 | 15 | 15 | 30 |

| | | | |
|---|---|---|---|
| S = Spotting B = Belag | | | |

### Phosphathaltige Formulierung P1

| Polymer | Messer (S + B) | Gläser (S + B) | Summe (max 40) |
|---|---|---|---|
| V1 | 19 | 12 | 31 |
| V2 | 18 | 13 | 31 |
| | | | |
| 2 | 19 | 13 | 32 |
| 3 | 19 | 16 | 35 |

Die erfindungsgemäßen Polymere wurden auch in der Formulierung PF2 getestet. Auch mit der Formulierung PF2 schnitten die erfindungsgemäßen Copolymere besser als die Vergleichspolymere ab.

## Patentansprüche

1. Copolymere, welche
a1) 30 bis 90 Gew.-% mindestens einer monoethylenisch ungesättigten C₃-C₈-Carbonsäure, eines Anhydrids oder wasserlöslichen Salzes derselben,
a2) 3 bis 60 Gew.-% mindestens eines Sulfonsäuregruppen enthaltenden Monomers, ausgewählt aus 2-Acrylamido-2-methylpropansulfonsäure, Allylsulfonsäure und deren wasserlöslichen Salzen,
a3) 3 bis 60 Gew.- % mindestens eines nichtionischen Monomers der Formel (I)
H₂C=C(R¹)COO-[R²-O]ₒ-R³ (I),
in der R¹ für Wasserstoff oder Methyl, R² für gleiche oder verschiedene Alkylenreste, die blockweise oder statistisch angeordnet sein können, ausgewählt aus Ethylen und 1,2-Propylen, und R³ für Wasserstoff oder einen geradkettigen oder verzweigten C₁-C₄-Alkylrest und o für eine natürliche Zahl von 3 bis 50 stehen,
a4) 0 bis 30 Gew.-% eines oder mehrerer weiterer ethylenisch ungesättigter Monomere, die mit a1), a2) und a3) polymerisierbar sind,
wobei die Summe aus a1), a2), a3) und a4) 100 Gew.-% ergibt,
einpolymerisiert enthalten.

2. Copolymere nach Anspruch 1, **dadurch gekennzeichnet, dass** Monomer a1) ausgewählt ist aus der Gruppe bestehend aus Acrylsäure, Methacrylsäure und wasserlöslichen Salzen der Acrylsäure und Methacrylsäure.

3. Copolymere nach Anspruch 1 oder 2, **dadurch gekennzeichnet, dass** o 5 bis 40 ist

4. Copolymere nach einem der Ansprüche 1 bis 3, **dadurch gekennzeichnet, dass** in Formel (I) R¹ = H ist.

5. Copolymere nach Anspruch 4, **dadurch gekennzeichnet, dass** in Formel (I) R¹ = Methyl ist.

6. Copolymere nach einem der Ansprüche 1 bis 5, **dadurch gekennzeichnet, dass** in Formel (I) R² Ethylen ist.

7. Copolymere nach einem der Ansprüche 1 bis 6, **dadurch gekennzeichnet, dass** in Formel (I) R³ Methyl ist.

8. Copolymere nach einem der Ansprüche 1 bis 7 enthaltend 45 bis 85 Gew.-% a1), 4 bis 40 Gew.-% a2) und 4 bis 35 Gew.-% a3).

9. Copolymere nach Anspruch 8, enthaltend 47 bis 83 Gew.-% a1), 6 bis 35 Gew.-% a2) und 6 bis 30 Gew.-% a3).

10. Verwendung der Copolymere nach einem der Ansprüche 1 bis 9 als belagsinbibierender Zusatz in Wasch- und Reinigungsmitteln.

11. Verwendung nach Anspruch 10 in phosphatfreien oder phosphathaltigen Reinigungsformulierungen für die maschinelle Geschirrreinigung.

12. Reinigungsformulierung für die maschinelle Geschirrreinigung enthaltend als Komponenten:
a) 1 bis 20 Gew.-% mindestens eines Copolymeren wie in einem der Ansprüche 1 bis 9 definiert,
b) 0 bis 20 Gew.-% von Komponente a) verschiedene Polycarboxylate,
c) 0 bis 50 Gew.-% Komplexbildner,
d) 0 bis 70 Gew.-% Phosphate,
e) 0 bis 60 Gew.-% weitere Builder und Cobuilder,
f) 0,1 bis 20 Gew.-% nichtionische Tenside,
g) 0 bis 30 Gew.-% Bleichmittel und gegebenenfalls Bleichaktivatoren und Bleichkatalysatoren,
h) 0 bis 8 Gew.-% Enzyme,
i) 0 bis 50 Gew.-% einer oder mehrerer weiterer Zusatzstoffe wie anionische oder zwitterionische Tenside, Alkaliträger, Korrosionsinhibitoren, Entschäumer, Farbstoffe, Duftstoffe, Füllstoffe, organische Lösungsmittel, Tablettierhilfsmittel, Disintegrationsmittel, Verdicker, Löslichkeitsvermittler und Wasser,
wobei die Summe der Komponenten a) bis i) 100 Gew.-% ergibt.

## Claims

1. A copolymer which comprises, in copolymerized form,
a1) 30 to 90% by weight of at least one monoethylenically unsaturated C₃-C₈-carboxylic acid or of an anhydride or water-soluble salt thereof,
a2) 3 to 60% by weight of at least one monomer comprising sulfo groups, selected from 2-acrylamido-2-methylpropanesulfonic acid, allysulfonic acid and the water-soluble salts thereof,
a3) 3 to 60% by weight of at least one nonionic monomer of the formula (I)
H₂C=C(R¹)COO-[R²-O]ₒ-R³ (I)
in which R¹ is hydrogen or methyl, R² are identical or different alkylene radicals which may be arranged in blocks or randomly, selected from ethylene and 1,2-propylene, and R³ is hydrogen or a straight-chain or branched C₁-C₄-alkyl radical and o is a natural number from 3 to 50,
a4) 0 to 30% by weight of one or more further ethylenically unsaturated monomers which are polymerizable with a1), a2) and a3),
where the sum of a1), a2), a3) and a4) adds up to 100% by weight.

2. A copolymer according to claim 1, wherein monomer a1) is selected from the group consisting of acrylic acid, methacrylic acid and water-soluble salts of acrylic acid and methacrylic acid.

3. A copolymer according to claim 1 or 2, wherein o is 5 to 40.

4. A copolymer according to any of claims 1 to 3, wherein R¹ in formula (I) is H.

5. A copolymer according to claim 4, wherein R¹ in formula (I) is methyl.

6. A copolymer according to any of claims 1 to 5, wherein R² in formula (I) is ethylene.

7. A copolymer according to any of claims 1 to 6, wherein R³ in formula (I) is methyl.

8. A copolymer according to any of claims 1 to 7, comprising 45 to 85% by weight of a1), 4 to 40% by weight of a2) and 4 to 35% by weight of a3).

9. A copolymer according to claim 8, comprising 47 to 83% by weight of a1), 6 to 35% by weight of a2) and 6 to 30% by weight of a3).

10. The use of the copolymers according to any of claims 1 to 9 as a scale-inhibiting additive in washing and cleaning products.

11. The use according to claim 10 in phosphate-free or phosphate-containing detergent formulations for machine dishwashing.

12. A detergent formulation for machine dishwashing, comprising, as components:
a) 1 to 20% by weight of at least one copolymer as defined in any of claims 1 to 9,
b) 0 to 20% by weight of polycarboxylates other than component a),
c) 0 to 50% by weight of complexing agents,
d) 0 to 70% by weight of phosphates,
e) 0 to 60% by weight of further builders and cobuilders,
f) 0.1 to 20% by weight of nonionic surfactants,
g) 0 to 30% by weight of bleaches and optionally bleach activators and bleach catalysts,
h) 0 to 8% by weight of enzymes,
i) 0 to 50% by weight of one or more further additives such as anionic or zwitterionic surfactants, alkali carriers, corrosion inhibitors, defoamers, dyes, fragrances, fillers, organic solvents, tabletting aids, disintegrants, thickeners, solubilizers and water,
wherein the sum of components a) to i) adds up to 100% by weight.

## Revendications

1. Copolymères qui contiennent, sous forme copolymérisée,
al) 30 à 90% en poids d'au moins un acide carboxylique en C₃-C₈ éthyléniquement monoinsaturé, d'un anhydride ou d'un sel soluble dans l'eau de celui-ci,
a2) 3 à 60% d'au moins un monomère contenant des groupes acide sulfonique, choisi parmi l'acide 2-acrylamido-2-méthylpropanesulfonique, l'acide allylsulfonique et leurs sels solubles dans l'eau,
a3) 3 à 60% en poids d'au moins un monomère non ionique de formule (I)
**H₂C=C(R¹)COO-[R²-O]ₒ-R³** **(I),**
dans laquelle R¹ représente hydrogène ou méthyle, R² représente des radicaux alkylène identiques ou différents, qui peuvent être disposés par blocs ou de manière statistique, choisis parmi l'éthylène et le 1,2-propylène, et R³ représente hydrogène ou un radical alkyle en C₁-C₄ linéaire ou ramifié et o représente un nombre naturel de 3 à 50,
a4) 0 à 30% en poids d'un ou de plusieurs autres monomères éthyléniquement insaturés, qui sont polymérisables avec a1), a2) et a3),
la somme de a1), a2), a3) et a4) valant 100% en poids.

2. Copolymères selon la revendication 1, **caractérisés en ce que** le monomère a1) est choisi dans le groupe constitué par l'acide acrylique, l'acide méthacrylique et les sels solubles de l'acide acrylique et de l'acide méthacrylique.

3. Copolymères selon la revendication 1 ou 2, **caractérisés en ce que** o vaut 5 à 40.

4. Copolymères selon l'une quelconque des revendications 1 à 3, **caractérisés en ce que**, dans la formule (I), R¹ = H.

5. Copolymères selon la revendication 4, **caractérisés en ce que**, dans la formule (I), R¹ = méthyle.

6. Copolymères selon l'une quelconque des revendications 1 à 5, **caractérisés en ce que**, dans la formule (I), R² représente éthylène.

7. Copolymères selon l'une quelconque des revendications 1 à 6, **caractérisés en ce que**, dans la formule (I), R³ représente méthyle.

8. Copolymères selon l'une quelconque des revendications 1 à 7 contenant 45 à 85% en poids de a1), 4 à 40% en poids de a2) et 4 à 35% en poids de a3).

9. Copolymères selon la revendication 8 contenant 47 à 83% en poids de a1), 6 à 35% en poids de a2) et 6 à 30% en poids de a3).

10. Utilisation des copolymères selon l'une quelconque des revendications 1 à 9 comme additif inhibant les incrustations dans les agents de lavage et de nettoyage.

11. Utilisation selon la revendication 10 dans des formulations de nettoyage exemptes de phosphates ou contenant des phosphates pour le nettoyage de vaisselle en machine.

12. Formulation de nettoyage pour le nettoyage de vaisselle en machine contenant, comme constituant :
a) 1 à 20% en poids d'au moins un copolymère tel que défini dans l'une quelconque des revendications 1 à 9,
b) 0 à 20% en poids de polycarboxylates différents du composant a),
c) 0 à 50% en poids de complexants,
d) 0 à 70% en poids de phosphates,
e) 0 à 60% en poids d'autres adjuvants et co-adjuvants,
f) 0,1 à 20% en poids d'agents tensioactifs non ioniques,
g) 0 à 30% en poids d'agents de blanchiment et le cas échéant d'activateurs et de catalyseurs de blanchiment,
h) 0 à 8% en poids d'enzymes,
i) 0 à 50% en poids d'un ou de plusieurs autres additifs, tels que des agents tensioactifs anioniques ou zwittérioniques, des supports d'alcalis, des inhibiteurs de corrosion, des antimousses, des colorants, des parfums, des charges, des solvants organiques, des adjuvants de transformation en comprimés, des agents de désintégration, des épaississants, des promoteurs de solubilité et de l'eau,
la somme des composants a) à i) valant 100% en poids.
